# EUROPEAN PATENT APPLICATION

(11) **EP 2 025 625 A1**
(43) Date of publication of application: **18.02.2009**
(21) Application number: 07741789.7
(22) Date of filing: 17.04.2007
(51) Int. Cl.: B65G 1/137, B65G 1/04, B66F 9/07

(54) **ARTICLE STORAGE FACILITY AND ITS OPERATING METHOD**

(30) Priority: 08.06.2006 JP 2006159844
(71) Applicant: DAIFUKU CO., LTD., Osaka-shi Osaka 555-0012 (JP)
(72) Inventor: IIZUKA, Yukio, Gamo-gun, Shiga 529-1692 (JP)
(74) Representative: Grosse, Wolfgang
(86) International application number: PCT/JP2007/058353
(87) International publication number: WO 2007/141961

(57) **Abstract**

An article storage facility comprising an article storage shelf including a plurality of storage sections arranged in a vertical direction and parallel to a width direction of the shelf, a stacker crane (5) for conveying an article between the storage sections and an article carrying-in/carrying-out portion, and a controller for controlling the operation of the stacker crane (5), wherein the stacker crane (5) includes an article transfer device (14) movable relative to a lift (13) in the width direction of the shelf between a first position adjacent to a first support column (12a) and a second position adjacent to a second support column (12a).

## Description

### TECHNICAL FIELD

The present invention relates to an article storage facility, and more particularly, to an article storage facility comprising an article storage shelf including a plurality of storage sections arranged in a vertical direction and a first horizontal direction parallel to a width direction of the shelf, a stacker crane for conveying an article between the storage sections and an article carrying-in/carrying-out portion, and a controller for controlling the operation of the stacker crane.

### BACKGROUND ART

The article storage facility noted above is adapted to convey the article carried in the article carrying-in/carrying-out portion from the outside to any of the storage sections of the article storage shelf via the stacker crane and also convey the article stored in any of the storage sections of the article storage shelf to the article carrying-in/carrying-out portion via the stacker crane to carry the article outside.

In a conventional article storage facility, the stacker crane includes a single article transfer device fixedly supported to a lift to be vertically movable, being guided by support columns mounted upright in a carriage. The article transfer device is moved to a position suitable for transferring the article between the storage sections by running movement of the carriage in the width direction of the shelf and vertical movement of the lift (see Patent Document 1, for example).

The stacker crane noted above includes a pair of support columns mounted upright at opposite ends of the carriage in the width direction of the shelf and connected to each other at upper ends thereof through a support column connecting member. The single article transfer device is fixedly mounted between the pair of support columns.
Patent Document 1: Japanese Unexamined Patent Application Publication No. 2005-138995

### DISCLOSURE OF THE INVENTION

### PROBLEM TO BE SOLVED BY THE INVENTION

It is desirous that the length of the carriage in the width direction of the shelf is large so that the stacker crane in the article storage facility may run stably. More particularly, when the article storage facility includes the article storage shelf having an increased height, the stacker crane also has an increased height to match the tall article storage shelf, and thus it is desired that the carriage has an increased length in the width direction of the shelf in order to run the stacker crane stably.

However, with the dimension of the carriage of the stacker crane being increased in the width direction of the shelf, when the article is transferred between the storage sections located in one end or in the other end of the article storage shelf in the width direction of the shelf, an end portion of the stacker crane in the width direction of the shelf projects laterally to a large extent from the storage sections located at the one end or the other end of the shelf. This requires a large space to be secured in the width direction of the shelf for arranging the stacker crane, which makes it difficult to save space in the article storage facility.
The present invention has been made having regard to the above-noted problem, and its object is to provide an article storage facility facilitating saving of space.

### MEANS FOR SOLVING THE PROBLEM

In order to achieve the above-noted object, the characteristic feature of the present invention lies in an article storage facility comprising:
an article storage shelf including a plurality of storage sections arranged in a vertical direction and a first horizontal direction parallel to a width direction of the shelf;
a stacker crane for conveying an article between the storage sections and an article carrying-in/carrying-out portion; and
a controller for controlling the operation of the stacker crane,
wherein the stacker crane includes:
   a carriage having a first carriage end, and a second carriage end spaced from the first carriage end in the first horizontal direction;
   a first support column mounted upright on the carriage at the first carriage end;
   a second support column mounted upright on the carriage at the second carriage end;
   a support column connecting member for connecting the first support column to the second support column at upper ends thereof;
   a lift to be vertically movable, being guided by at least one of the first support column and the second support column;
   a single article transfer device supported by the lift to be movable relative to the lift in the first horizontal direction; and
   an actuator for moving the article transfer device along the first horizontal direction between a first position adjacent to the first support column and a second position adjacent to the second support column.

Further, in the method for operating the article storage facility having the above-noted arrangement, the article transfer device is placed in the first position when the article is transferred between the storage sections located in the first shelf end portion of the article storage shelf, and is placed in the second position when the article is transferred between the storage sections located in the second shelf end portion of the article storage shelf.

More particularly, the single article transfer device is supported by the lift to be movable in the width direction of the shelf by the actuator for moving the article transfer device between the pair of support columns (first column and second column). The article transfer device is moved to a position suitable for transferring the article between the storage sections by running movement of the carriage in the width direction of the shelf, vertical movement of the lift, and movement of the article transfer device in the width direction of the shelf (first horizontal direction).

For example, when the article is transferred between the storage sections located at one end portion of the article storage shelf (first shelf end portion), the article transfer device is moved to a position close to one of the support columns (first column) located adjacent the one end portion of the shelf in the width direction. This reduces the amount of projection of the one end portion of the stacker crane from the first shelf end portion of the shelf when the stacker crane is stopped at a position suitable for the article transfer device to transfer the article between the storage sections. Also, when the article is transferred between the storage sections located at the other end portion of the article storage shelf in the width direction, the stacker crane is stopped so that the article transfer device is properly positioned relative to the storage sections by moving the article transfer device to a position close to the other of the support columns that is located adjacent the other end portion of the shelf. This reduces the amount of projection of the other end portion of the stacker crane from the second shelf end portion of the shelf.

Thus, even if the carriage has an increased length in the width direction of the shelf in order to run the stacker crane stably, the amount of lateral projection of the end portion of the stacker crane in the width direction of the shelf can be reduced when the article is transferred between the storage sections located at the one end portion or the other end portion of the article storage shelf in the width direction, which eventually reduces space for arranging the stacker crane. As a result, the space-saving article storage facility is provided.

According to another characteristic feature of the present invention, a space defined between the first support column and the second support column is twice or more as large as a space defined between a central position of one of the storage sections in the first horizontal direction and a central position of the adjacent storage section in the first horizontal direction.
The stacker crane can run more stably by providing the carriage having the increased dimension in the width direction of the shelf in this manner. Although the carriage has the increased dimension in the width direction of the shelf, a range of movement of the article transfer device in the width direction of the shelf can be extended due to a large space between the pair of support columns. This reduces the amount of lateral projection of the end portion of the stacker crane in the width direction of the shelf from the storage sections located at the end portion of the shelf when the article is transferred between the storage sections located at the one end portion or the other end portion of the article storage shelf in the width direction.

According to a further characteristic feature of the present invention, the first support column has strength greater than the second support column.
With this arrangement, when the article transfer device is controlled to stay in the first position adjacent to the first support column for a longer time than when staying in the second position, and the pair of support columns are shaken by acceleration of the stacker crane, for example, the shaking of the first column is small and subsides soon compared with the second support column because the first support column positioned close to the article transfer device has a greater strength. Thus, the article can be transferred more smoothly. Further, the total weight of the pair of support columns is reduced compared with the pair of support columns both having the increased strength.

According to a still further characteristic feature of the present invention, the stacker crane further includes a third support column spaced from the first support column in a second horizontal direction normal to the first horizontal direction, a fourth support column spaced from the second support column in the second horizontal direction, a first connecting member for connecting the first support column to the third support column, and a second connecting member for connecting the second support column to the fourth support column.
More particularly, since each of the two pairs of the support columns are connected to each other by the connecting member, respectively, it is possible to restrain the shaking of the support columns when the stacker crane runs in the width direction of the shelf or the article transfer device is moved in the width direction of the shelf. As a result, the lift is guided stably by the four support columns.

According to a still further characteristic feature of the present invention, the actuator is a linear actuator.
The linear actuator is suitable for moving the article transfer device over a relatively long distance relative to the lift.
According to another characteristic feature of the present invention, the method for the operating the article storage facility allows the article transfer device to be placed in the first position when the article is transferred between the storage sections other than the storage sections located in the first shelf end portion of the article storage shelf.
This method reduces the amount of movement of the article transfer device.

### BEST MODE FOR CARRYING OUT THE INVENTION

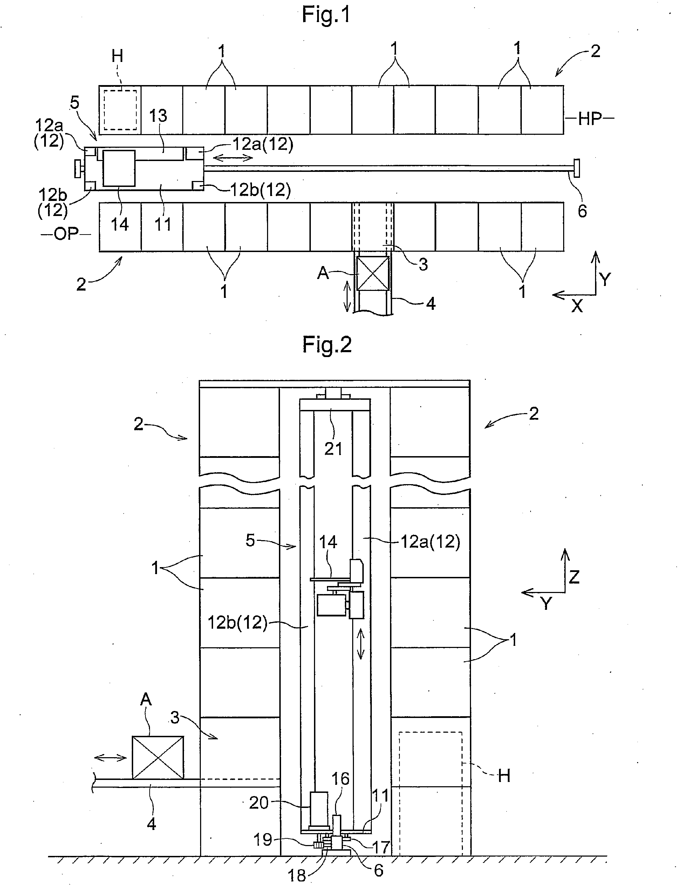

Embodiments of the present invention will be described with reference to the accompanying drawings.
As shown in Figs. 1 and 2, an article storage facility comprises an article storage shelf 2 including a plurality of storage sections 1 arranged in a vertical direction (Z) and a width direction (a first horizontal direction (X)), a carrying-in/carrying-out apparatus 4 including an article carrying-in/carrying-out portion 3 for allowing a cassette (one example of articles A) accommodating a plurality of semiconductor wafers arranged vertically to be carried in and carried out, a stacker crane 5 for conveying the article A between the storage sections 1 and the article carrying-in/carrying-out portion 3, and an operation control apparatus (controller) H for controlling the operation of the stacker crane 5.

One pair of the article shelves are provided to be spaced from each other in a fore-and-aft direction of the shelf (a second horizontal direction along a direction Y) so that directions to access the articles in the respective shelves face each other. The stacker crane 5 automatically travels along the width direction of the shelf between the pair of article shelves 2, guided by a traveling rail 6 mounted on a floor surface.

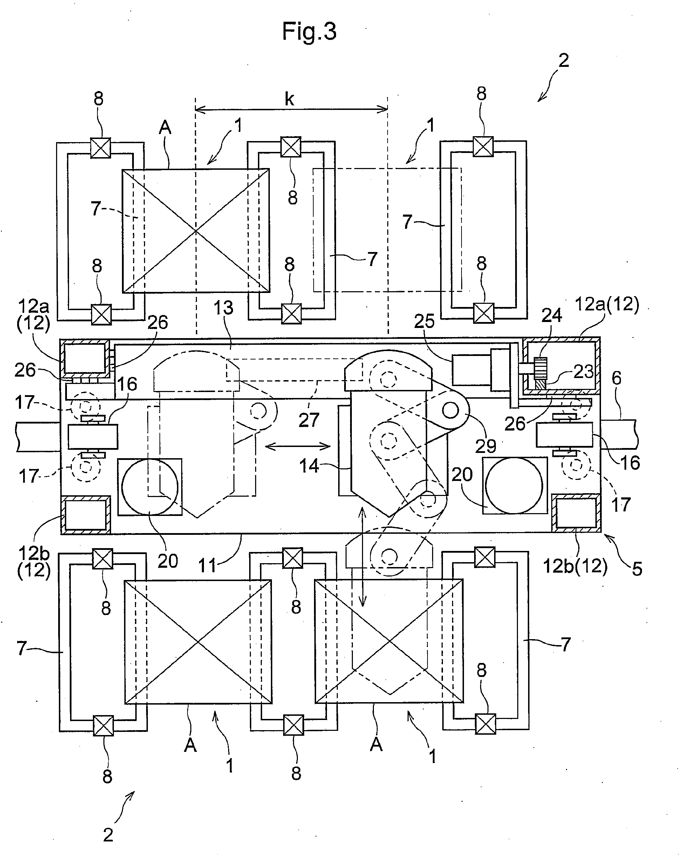

One of opposite sides of the shelves in the width direction is referred to as an HP side (right side in Fig. 1) and the other of the opposite sides is referred to as an OP side (left side in Fig. 1) hereinafter.
As shown in Fig. 3, each storage section 1 of each storage shelf 2 is provided with a right and left pair of article supports 7 extending along the fore-and-aft direction of the shelf and spaced apart from each other in the width direction of the shelf. More particularly, each shelf 2 includes a plurality of fore-and-aft pairs of shelf struts 8 arranged in the width direction of the shelf. Each of the article supports 7 is provided between each of the fore-and-aft pairs of shelf struts 8. Each of the storage sections 1 accommodate the article A by supporting the article A by the right and left pair of article supports 7.

As shown in Figs. 1 and 2, the carrying-in/carrying-out apparatus 4 has an end portion located within the article storage shelf 2. This end portion of the carrying-in/carrying-out apparatus 4 located within the article storage shelf 2 is adapted to act as the article carrying-in/carrying-out portion 3 used in carrying in/out the article A.
The stacker crane 5 includes a carriage 11, a pair of support columns 12 (guide columns 12a) provided upright at opposite ends of the carriage 11 in the width direction of the shelf and connected to each other at upper ends thereof through a column connecting member 22, a lift 13 guided by at least one of the pair of support columns 12 to be vertically movable, a single article transfer device 14 mounted on the lift 13, and an electric-powered cylinder 27(one example of actuators) for moving the article transfer device 14 in the width direction of the shelf between the pair of support columns 12 (guide columns 12a).

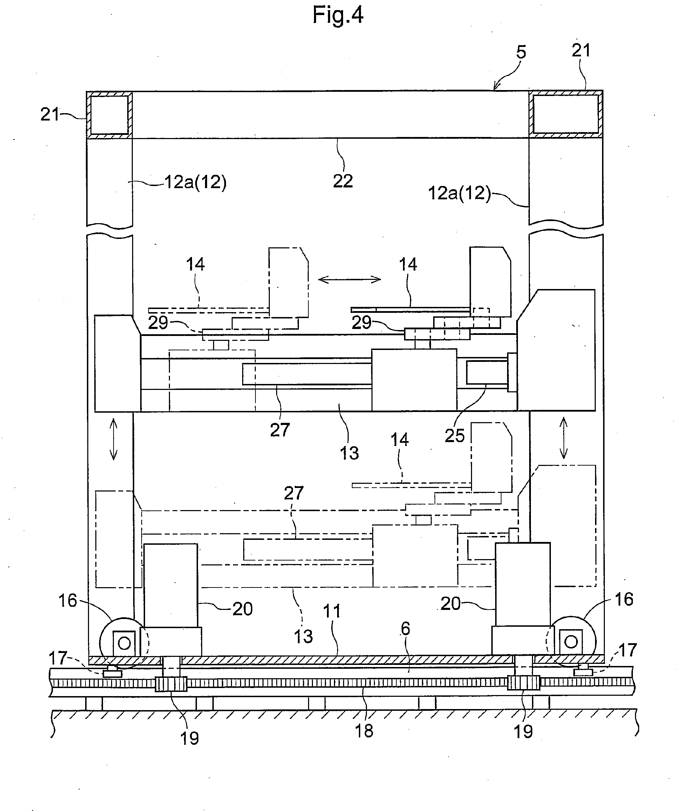

As shown in Figs. 3 and 4, the carriage 11 includes traveling wheels 16 rolling over an upper surface of the traveling rail 6, guide wheels 17 guided by contacting side surfaces of the traveling rail 6, and a propelling motor 20 for driving a traveling pinion 19 meshed with a traveling rack 18 mounted on the side surface of the traveling rail 6 along the width direction of the shelf. The traveling pinion 19 is rotatably driven by the propelling motor 20 thereby allowing the carriage 11 (that is, the stacker crane 5) to move along the width direction of the shelf.

The carriage 11 includes the pair of support columns 12 (a first column and a second column) arranged in the width direction of the shelf (along the direction X), and a further pair of support columns 12 (a third column and a fourth column). The first pair of support columns 12 (the first column and the second column) and the further pair of support columns 12 (the third column and the fourth column) are arranged in the fore-and-aft direction of the shelf (the second horizontal direction along the direction Y). Those two pairs of support columns are connected by column-pair connecting members 21. The lift 13 is guided by one of those two pairs of support columns.

More particularly, one of the two pairs of support columns acts as the pair of guide columns 12a for vertically guiding the lift 13. The other pair of the two pairs of support columns acts as a pair of auxiliary columns 12b. Similarly to the guide columns 12a, the pair of auxiliary columns 12b are provided upright at the opposite ends of the carriage 11 (a first carriage end and a second carriage end) in the width direction of the shelf and connected to each other through the column connecting member 22.
As shown in Fig. 3, a space defined between the pair of guide columns 12a (the first column and the second column) is more than twice as large as, preferably slightly larger than twice, a space k defined between a central position of one of the storage sections 1 in the width direction of the shelf and a central position of the adjacent storage section 1 in the width direction of the shelf.

One of the pair of guide columns 12a located adjacent the HP side (the first column) is thicker than the other of the pair of guide columns 12a located adjacent the OP side (the second column) both in the fore-and-aft direction and the width direction of the shelf. Also, one of the pair of guide columns 12a located adjacent the HP side has strength greater than that of the other of the pair of guide columns 12a located adjacent the OP side.

Each of the pair of auxiliary columns 12b (the third column and the fourth column) has substantially the same thickness and the same strength as the guide column 12a located adjacent the OP side. A balance weight (not shown) is provided in the interior of each of the pair of auxiliary columns 12b to be vertically movable. The balance weight is connected to the other end of a wire (not shown) having one end connected to the lift 13 and an intermediate portion wrapped around an upper end of the guide column 12a and an upper end of the auxiliary column 12b.

The lift 13 is guided vertically by a linear guide 26 for vertical movement to be vertically movable. The lift 13 is provided with a motor 25 for vertical movement for rotatably driving a pinion 24 for vertical movement meshed with a rack 23 for vertical movement arranged along the vertical direction in the interior of the guide column 12a located adjacent the HP side and having the greater strength. The pinion for vertical movement 24 is roratably driven by the motor 25 for vertical movement thereby allowing the lift 13 to be vertically movable.

The article transfer device 14 transfers the article A between the storage sections 1 and the article carrying-in/carrying-out portion 3 by cooperation of extension/contraction of a SCARA (Selective Compliance Articulated Robot Arm) 29 and vertical movement of the lift 13. Further, the SCARA 29 is rotatable about the vertical axis to change the direction of extension/contraction of the SCARA 29 thereby allowing the article A to be transferred to/from both the article storage shelves 2 facing to each other between the storage sections 1. The SCARA 29 includes a first arm having one end supported by the lift through a first axis extending vertically and a second arm having one end oscillatably connected to the other end of the first arm through a second axis extending vertically and the other end oscillatably connected to the article transfer device 14 through a third axis.

The article transfer device 14 is guided by a movement linear guide (not shown) in the width direction of the shelf and supported by the lift 13 to be movable along the width direction of the shelf. Any known construction may be employed for moving the article transfer device 14 relative to the lift 13. For example, such a construction may include a ball screw and an electric-powered motor. According to this embodiment, the article transfer device 14 is movable by power from the electric-powered cylinder 27 (one example of the actuators) between a position adjacent the HP side in the vicinity of the guide column 12a (first column) of the pair of guide columns 12a located adjacent the HP side (a first position shown in solid lines in Fig. 3), and a position adjacent the OP side in the vicinity of the guide column 12a (second column) of the pair of guide columns 12a located adjacent the OP side (a second position shown in imaginary lines in Fig. 3). The first position is located at one side of a central position of the lift 13 in the first horizontal direction, while the second position is located at the other side of the central position. Further, the first position is closer to the first column than the second column, while the second position is closer to the second column than the first column. The first position and the second position of the article transfer device 14 may be reversed.

Thus, the actuator has the construction for allowing the article transfer device 14 to move over the substantial length of the lift 13 in the transverse direction (first horizontal direction). Preferably, the actuator is a linear actuator for allowing the article transfer device 14 to move over a distance of 20% or more of the transverse length of the lift 13. Further preferably, the actuator allows the article transfer device 14 to move over a distance of 30% or more of the transverse length of the lift 13.

A space defined between the position at the HP side (first position) and the position at the OP side (second position) is the same or substantially the same as the space k defined between the central position of one of the storage sections 1 in the width direction of the shelf and the central position of the adjacent storage section 1 in the width direction of the shelf.

Next, the operation control apparatus (controller) H will be described.
The operation control apparatus H includes an algorithm (program) for the operation described in the present application which is stored in a known CPU, an input section, an output section and a memory.

The operation control apparatus H stores information indicating a stop position of the carriage 11 which is predetermined corresponding to each storage section 1 and the article carrying-in/carrying-out position 3, information indicating a stop position of the lift 13 which is predetermined corresponding to each storage section 1 and the article carrying-in/carrying-out position 3. The stop position of the carriage 11 at which the article A is transferred between the article storage sections 1 other than the storage sections 1 located at an end portion of the article storage shelf 2 adjacent the OP side in the width direction of the shelf (second shelf end portion) is a position at which the article transfer device 14 is properly positioned relative to the article storage sections 1 when moved close to the support column 12 (first column) located at the HP side. Further, the stop position of the carriage 11 at which the article A is transferred between the article storage sections 1 located at the end portion of the article storage shelf 2 adjacent the OP side in the width direction of the shelf is a position at which the article transfer device 14 is properly positioned relative to the article storage sections 1 when moved close to the support column 12 (second column) located at the OP side.

As shown in Fig. 4, when an access command is given to transfer the article A from the article carrying-in/carrying-out portion 3 to the article storage sections 1 or from the article storage sections 1 to the article carrying-in/carrying-out portion 3, the operation control apparatus H controls the operation of the propelling motors 20, the motor 25 for vertical movement, the electric-powered cylinder 27 and the article transfer device 14 based on the access command, information detected from a rotation detecting sensor 31 for travel for detecting the amount of rotation of the traveling pinion 19 from the stacker crane 5, information detected from a rotation detecting sensor 32 for vertical movement for detecting the amount of rotation of the pinion 24 for vertical movement, and information detected from a contraction detecting sensor 33 for detecting the amount of extension/contraction of the electric-powered cylinder 27. In this manner, the operation control apparatus H controls the operation of the stacker crane 5. The contraction detecting sensor 33 may be a rotary sensor for sensing the number of rotation of a shaft associated with the electric-powered cylinder 27, or may be any of the other known sensors.

It should be noted that a variety of information is transmitted and received between the operation control apparatus H and the stacker crane 5 by transmitting and receiving optical signals to/from a fixed optical transmitting and receiving device 34 and a movable optical transmitting and receiving device 35. Alternatively, it is possible to employ a conventional wireless communication method using electromagnetic waves or a communication method using a wire.

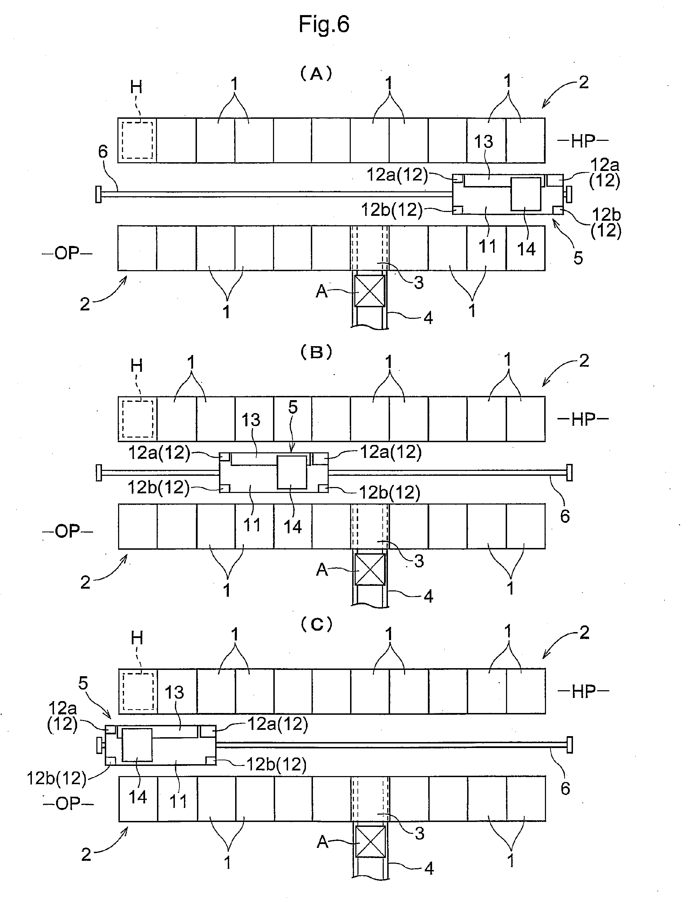

The operation control apparatus H moves the article transfer device 14 to a position closer to the guide column 12a (first column) of the pair of guide columns 12a located adjacent the HP side when the article A is transferred between the article storage sections 1 located at the end portion of the article storage shelf 2 adjacent the HP side (first shelf end) (see Fig. 6(A)). The operation control apparatus H controls the operation of the electric-powered cylinder 27 to move the article transfer device 14 to a position closer to the guide column 12a (second column) of the pair of guide columns 12a located adjacent the OP side when the article A is transferred between the article storage sections 1 located at the end portion of the article storage shelf 2 adjacent the OP side (second shelf end) (see Fig. 6(C)).

Thus, as shown in Fig. 6(A), when the article A is transferred between the article storage sections 1 located at the end portion of the article storage shelf 2 adjacent the HP side (first shelf end), the article transfer device 14 is moved closer to the support column 12 (first column) of the pair of support columns 12 located adjacent the HP side, as a result of which the stop position of the stacker crane 5 is displaced to the OP side. This reduces the amount of projection of the end of the stacker crane 5 adjacent the HP side from the end of the article storage shelf 2 adjacent the HP side toward the HP side. Similarly, as shown in Fig. 6(C), when the article A is transferred between the article storage sections 1 located at the end portion of the article storage shelf 2 adjacent the OP side (second shelf end), the article transfer device 14 is moved closer to the support column 12 (second column) of the pair of support columns 12 located adjacent the OP side, as a result of which the stop position of the stacker crane 5 is displaced to the HP side. This reduces the amount of projection of the end of the stacker crane 5 adjacent the OP side from the end of the article storage shelf 2 adjacent the OP side toward the OP side.

The operation control apparatus H controls the electric-powered cylinder 27 to move the article transfer device 14 to a position closer to the guide column 12a (first column) of the pair of guide columns 12a located adjacent the HP side when the article A is transferred between the article storage sections 1 other than the articles storage sections 1 located at the end portion of the article storage shelf 2 adjacent the OP side (second shelf end) (see Fig. 6(A) and Fig. 6(B)). The amount of movement of the article transfer device 14 is reduced because the article transfer device 14 is moved only when the article A is transferred between the article storage sections 1 located at the end portion of the shelf adjacent the OP side.

As shown in Figs. 1 and 2, the operation control apparatus (controller) H is arranged in the article storage section 1 positioned at the bottom shelf of the article storage shelf 2 located at the end portion of the OP side. More particularly, as shown in Figs. 3 and 4, the two propelling motors 20 noted above are spaced from each other in the width direction of the shelf for running the carriage 11. As viewed from the side, the propelling motor 20 located adjacent the HP side is mounted close to the guide column 12a located at the HP side so that part of the motor 20 is positioned between the pair of guide columns 12a. On the other hand, as viewed from the side, the propelling motor 20 located adjacent the OP side is mounted close to the guide column 12a located at the OP side so that the entire motor 20 is positioned between the pair of guide columns 20.
As shown in Fig. 3, the article transfer device 14 does not vertically overlap the propelling motor 20 located at the HP side when the article transfer device 14 is positioned adjacent the HP side (first position). Thus, the article transfer device 14 can be lowered near the floor surface, which allows the article to be transferred between the bottom storage sections 1 of the article storage shelves 2. On the other hand, the article transfer device 14 vertically overlaps the propelling motor 20 located at the OP side when the article transfer device 14 is positioned adjacent the OP side (second position). This arrangement intends to increase the range of transverse movement of the article transfer device 14 when located at the OP side.

Thus, as the lift 13 is lowered to the height corresponding to the article storage sections 1 positioned at the bottom shelves, the article transfer device 14 cannot be moved toward the OP side because of the presence of the propelling motor 20 mounted at the OP side. This means that the article A cannot be transferred by the article transfer device 14 to the article storage sections 1 positioned at the bottom shelves of the articles storage shelves 2 adjacent the end portion of the shelf at the OP side. For this reason, the operation control apparatus H is arranged in the bottom storage section 1.
The position of the article transfer device when located at the HP side is predetermined to be closer to the center of the carriage 11 in the width direction of the shelf than the position of the article transfer device when located at the OP side.

### (Other Embodiments)

(1) In the above-noted embodiment, when the article A is transferred between the article storage sections 1 other than the articles storage sections 1 located at the end portion of the article storage shelf 2 adjacent the OP side, the article transfer device 14 is moved to a position closer to the support column 12 located adjacent the HP side. On the other hand, when the article A is transferred between the article storage sections 1 located at the end portion of the article storage shelf 2 adjacent the OP side, the article transfer device 14 is moved to a position closer to the support column 12 located adjacent the OP side. However, the position of the article transfer device 14 may vary when the article A is transferred between the article storage sections 1 other than the article storage sections 1 located at one end portion of the article storage shelves 2 in the width direction and the article storage sections 1 located at the other end portion of the article storage shelves 2 in the width direction.

More particularly, when the article A is transferred between the article storage sections 1 other than the article storage sections 1 located at one end portion of the article storage shelves 2 in the width direction and the article storage sections 1 located at the other end portion of the article storage shelves 2 in the width direction, the article transfer device 14 may be moved to a position closer to the support column 12 located adjacent the one end portion of the shelves or to a position closer to the support column 12 located adjacent the other end portion of the shelves, correspondently to the storage sections to be accessed.

Further, when the article A is transferred between the article storage sections 1 other than the article storage sections 1 located at one end portion of the article storage shelves 2 in the width direction and the article storage sections 1 located at the other end portion of the article storage shelves 2 in the width direction, the article transfer device 14 may remain in the position at which the article A has been transferred between the storage sections 1 located at the one end portion of the article storage shelves 2 in the width direction, or between the storage sections 1 located at the other end portion of the article storage shelves 2 in the width direction.

Also, when the article A is transferred between the article storage sections 1 other than the article storage sections 1 located at one end portion of the article storage shelves 2 in the width direction and the article storage sections 1 located at the other end portion of the article storage shelves 2 in the width direction, the article transfer device 14 may be moved to an intermediate position predetermined between the position at which the article transfer device 14 is moved close to the support column 12 located adjacent the one end portion of the shelves and the position at which the article transfer device 14 is moved close to the support column 12 located adjacent the other end portion of the shelves.

(2) In the above-noted embodiment, the space defined between the pair of guide columns 12a is twice or approximately twice as large as the space k defined between a central position of one of the storage sections 1 in the width direction of the shelf and a central position of the adjacent storage section 1 in the width direction of the shelf. Instead, the space between the pair of guide columns 12a may vary based on the range within which the article transfer device 14 moves in the width direction of the shelf between the pair of guide columns.

(3) In the above-noted embodiment, one of the pair of guide columns 12a located adjacent the one side of the shelf in the width direction has strength greater than that of the other of the pair of guide columns 12a located adjacent the other side of the shelf in the width direction. Instead, the pair of guide columns 12a may be substantially the same in construction and strength.

In the above-noted embodiment, one of the pair of guide columns 12a located adjacent the one side of the shelf is wider than the other of the pair of guide columns 12a located adjacent the other side of the shelf both in the fore-and-aft direction and the width direction of the shelf, and one of the pair of guide columns 12a located adjacent the one side has strength greater than that of the other of the pair of guide columns 12a located adjacent the other side. Instead, one of the guide columns 12a may be thicker than the other only in the width direction of the shelf, or may be different from the other in thickness and material used so that one of the pair of guide columns 12a located adjacent the one side has strength greater than that of the other of the pair of guide columns 12a located adjacent the other side.

(4) In the above-noted embodiment, the two pairs of support columns 12 are arranged along the fore-and-aft direction (along the direction Y). Instead, only one pair of support columns 12 may be provided. More particularly, although the pair of guide columns 12a and the pair of auxiliary columns 12b are provided in the above-noted embodiment, the pair of auxiliary columns 12b are dispensable while only the pair of guide columns 12a may be provided.

(5) In the above-noted embodiment, the lift 13 is guided to be vertically movable by both of the pair of guide columns 12a. Instead, the lift 13 may be guided only one of the pair of guide columns 12a, particularly by one of the guide columns 12a having a greater strength.

### INDUSTRIAL APPLICABILITY

The article storage facility and a method for operation the same is applicable to a system of an automatic warehouse for accommodating an article.

### BRIEF DESCRIPTION OF THE DRAWINGS

Fig. 1 is a top plan view of an article storage facility;
Fig. 2 is a front view of the articles storage facility;
Fig. 3 is a top plan view of a stacker crane;
Fig. 4 is a side view of a stacker crane;

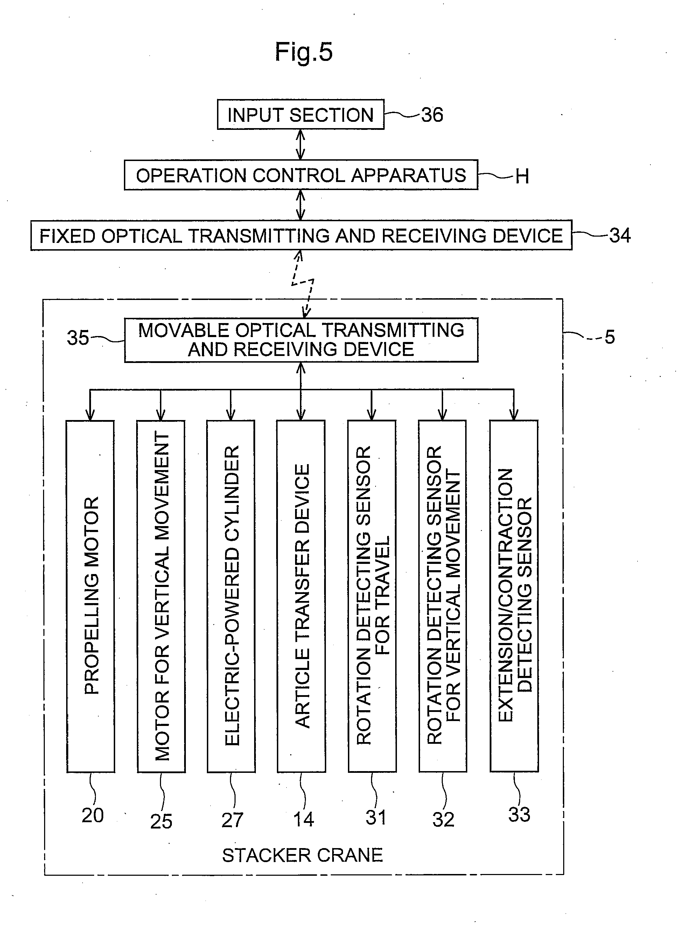

Fig. 5 is a control block diagram; and
Fig. 6 shows operative states in the article storage facility.

### DESCRIPTION OF THE REFERENCE SIGNS

- 1: storage section
- 2: storage shelf
- 3: article carrying-in/carrying-out portion
- 5: stacker crane
- 11: carriage
- 12: support column
- 13: lift
- 14: article transfer device
- 21: support column pair connecting member
- 22: support column connecting member
- 27: actuator
- A: article
- H: operation control apparatus

## Claims

1. An article storage facility comprising:
an article storage shelf including a plurality of storage sections (1) arranged in a vertical direction (Z) and a first horizontal direction (X) parallel to a width direction of the shelf;
a stacker crane (5) for conveying an article between the storage sections (1) and an article carrying-in/carrying-out portion (3); and
a controller (H) for controlling the operation of the stacker crane (5),
wherein the stacker crane (5) includes:
a carriage (11) having a first carriage end, and a second carriage end spaced from the first carriage end in the first horizontal direction (X);
a first support column (12a) mounted upright on the carriage (11) at the first carriage end;
a second support column (12a) mounted upright on the carriage (11) at the second carriage end;
a support column connecting member (22) for connecting the first support column (12a) to the second support column (12a) at upper ends thereof;
a lift (13) to be vertically movable, being guided by at least one of the first support column (12a) and the second support column (12a);
a single article transfer device (14) supported by the lift (13) to be movable in the first horizontal direction (X) relative to the lift (13); and
an actuator (27) for moving the article transfer device (14) along the first horizontal direction (X) between a first position adjacent to the first support column (12a) and a second position adjacent to the second support column (12a).

2. The article storage facility as claimed in claim 1, wherein a space defined between the first support column (12a) and the second support column (12a) is twice or more as large as a space (k) defined between a central position of one of the storage sections (1) in the first horizontal direction (X) and a central position of the adjacent storage section (1) in the first horizontal direction (X).

3. The article storage facility as claimed in claim 1 or 2, wherein the first support column (12a) has strength greater than the second support column (12a).

4. The article storage facility as claimed in claim 1 or 2, wherein the stacker crane (5) further includes;
a third support column (12b) spaced from the first support column (12a) in a second horizontal direction normal to the first horizontal direction (X);
a fourth support column (12b) spaced from the second support column (12a) in the second horizontal direction;
a first connecting member (21) for connecting the first support column (12a) to the third support column (12b); and
a second connecting member (21) for connecting the second support column (12a) to the fourth support column (12b).

5. The article storage facility as claimed in claim 1, wherein the actuator (27) is a linear actuator (27).

6. A method for operating an article storage facility, wherein the article storage facility comprises:
an article storage shelf including a plurality of storage sections (1) arranged in a vertical direction (Z) and a first horizontal direction (X) parallel to a width direction of the shelf, the storage shelf having a first shelf end portion and a second shelf end portion spaced from the first shelf end portion in the first horizontal direction (X);
a stacker crane (5) for conveying an article between the storage sections (1) and an article carrying-in/carrying-out portion (3); and
a controller (H) for controlling the operation of the stacker crane (5),
the stacker crane (5) including:
a carriage (11) having a first carriage end, and a second carriage end spaced from the first carriage end in the first horizontal direction (X);
a first support column (12a) mounted upright on the carriage (11) at the first carriage end;
a second support column (12a) mounted upright on the carriage (11) at the second carriage end;
a support column connecting member (22) for connecting the first support column (12a) to the second support column (12a) at upper ends thereof;
a lift (13) to be vertically movable, being guided by at least one of the first support column (12a) and the second support column (12a);
a single article transfer device (14) supported by the lift (13) to be movable in the first horizontal direction (X) relative to the lift (13); and
an actuator (27) for moving the article transfer device (14) along the first horizontal direction (X) between a first position adjacent to the first support column (12a) and a second position adjacent to the second support column (12a),
the method for operating the article storage facility being adapted to place the article transfer device (14) in the first position when the article is transferred between the storage sections (1) located in the first shelf end portion, and to place the article transfer device (14) in the second position when the article is transferred between the storage sections (1) located in the second shelf end portion.

7. The method for operating the article storage facility as claimed in claim 6, wherein the article transfer device (14) is placed in the first position when the article is transferred between the storage sections (1) other than the storage sections (1) located in the first shelf end portion of the article storage shelf.
